(19) Europäisches Patentamt / European Patent Office / Office européen des brevets

(11) **EP 2 840 728 B1**

(12) **EUROPEAN PATENT SPECIFICATION**

(45) Date of publication and mention
of the grant of the patent:
**23.08.2017 Bulletin 2017/34**

(51) Int Cl.:
***H04B 10/50*** (2013.01)      ***H04J 14/02*** (2006.01)
***H04J 14/06*** (2006.01)

(21) Application number: **13306167.1**

(22) Date of filing: **23.08.2013**

(54) **Optical transmitter arrangement for a passive optical network**

Optische Senderanordnung für passives optisches Netzwerk

Agencement d'émetteur optique pour un réseau optique passif

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.02.2015 Bulletin 2015/09**

(73) Proprietor: **ALCATEL LUCENT
92100 Boulogne-Billancourt (FR)**

(72) Inventors:
• **Gavioli, Giancarlo
20059 Vimercate, MI (IT)**
• **Razzetti, Luca Gabriele
20059 Vimercate, MI (IT)**

(74) Representative: **ALU Antw Patent Attorneys
Copernicuslaan 50
2018 Antwerpen (BE)**

(56) References cited:
**WO-A1-2011/018054      US-A1- 2012 141 128**

• **LUCIA MARAZZI ET AL: "Up to 10.7-Gb/s
High-PDG RSOA-Based Colorless Transmitter
for WDM Networks", IEEE PHOTONICS
TECHNOLOGY LETTERS, IEEE SERVICE
CENTER, PISCATAWAY, NJ, US, vol. 25, no. 7, 1
April 2013 (2013-04-01), pages 637-640,
XP011496944, ISSN: 1041-1135, DOI:
10.1109/LPT.2013.2243138**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The invention relates to the field of passive optical networks. In detail, the present invention relates to an optical transmitter arrangement for passive optical network, in particular (but not exclusively) for a WDM (Wavelength Division Multiplexing) passive optical network.

**Background**

As it is known, a Passive Optical Network (PON) is a type of an optical access network, which allows a plurality of users to be connected to a node of a core network that is for instance a metropolitan area network.

Furthermore, passive optical networks may be used as optical back hauling networks for wireless networks.

A PON typically comprises at the interconnection of the passive optical network and the core network an Optical Line Termination (OLT) and an Optical Distribution Network (ODN). The ODN in turn comprises a plurality of optical links and passive optical components arranged so as to form a point to multipoint structure whose root is connected to the OLT.

The OLT is typically located at the so called Central Office (CO) of the service provider. Each optical link of the OLT may be terminated at its far end by a respective Optical Network Unit (ONU).

In a WDM PON, each ONU may communicate with the OLT, by using a respective set of wavelengths comprising an upstream wavelength, which the ONU uses for transmission to the OLT, and a downstream wavelength, which the OLT uses for transmissions to the ONU. The upstream wavelength may be for instance located in the so called C-band, preferably in the range of 1530 nm to 1565 nm, whereas the downstream wavelength may be for instance located in the so called L-band, preferably in the range greater than 1565 nm.

In a WDM PON, the ODN typically comprises a so called remote node, a feeder optical fiber connecting the remote node to the OLT and a number of distribution optical fibers radiating from the remote node. Each distribution fiber may be terminated at its far end by an ONU or by a power splitting connecting the distribution fiber over the multiple ONUs via multiple drop optical fibers.

The feeder fiber is typically a link ranging from about 5 to 40 k, while the distribution fibers typically have a range of approximately some tens of meters up to a few kilometers depending on the environment. The remote node is typically a passive node, which means, that he comprises only passive components such as Arrayed Waveguide Grating (AWG) or optical couplers, which do not need power supply.

In the downstream direction, the OLT generates downstream optical signals at the downstream wavelengths associated to the ONUs, multiplexes them according to the known WDM technique and transmits them to the remote node along the feeder fiber. At the remote node, the downstream signals may be demultiplexed and each of them may be forwarded to a respective ONU along a respective distribution fiber.

In the upstream direction, each ONU generates a respective upstream signal at the upstream wavelength associated thereto and transmits this signal along the respective distribution fiber to the remote node. The remote node multiplexes all the upstream signals received from the various ONUs according to the known WDM technique and forwards them to the OLT through the feeder fiber. At the OLT, the upstream signals are demultiplexed and subject to subsequent processing.

Thus, each ONU should comprise a transmitter capable of transmitting upstream signals at the upstream wavelengths associated thereto. To minimize both manufacturing and inventory costs of the ONU, a known technique is that of providing all the ONUs of the same type of transmitter that is colourless, i.e. which in principle may transmit optical signals over a wide range of wavelengths and that may be optically tuned by an optical filter or a wavelength selection unit to the proper upstream wavelength assigned to this specific ONU.

The document "Marazzi et. al, 'Up to 10.7-Gb/s High-PDG RSOA-Based Colorless Transmitter for WDM Networks', Photonics Technology Letters, IEEE, April 1, 2013, Vol 25, No.7, p.637 - 640" discloses a colorless transmitter system with an optical transmission unit generating an optical signal and with a series connection having a first polarization rotator, an optical waveguide, a wavelength selection unit, a second polarization rotator and a mirror, wherein the optical transmission unit and the mirror form a cavity.

**Summary**

Proposed is an optical transmitter arrangement, which comprises an optical transmission unit operable to generate an optical signal comprising a first signal component having a polarization state that lies within a first polarization plane and furthermore comprising a second signal component having a polarization state that lies within a second polarization plane orthogonal to the first polarization plane.

The optical transmitter arrangement comprises furthermore a series connection comprising a first polarization rotator, an optical waveguide, a wavelength selection unit, a second polarization rotator and a mirror.

The optical transmission unit and the mirror form a cavity.

The series connection is configured to provide a reflected fraction of the first signal component to the optical transmission unit such that its polarization state lies within the first polarization plane.

The series connection is furthermore configured to provide a reflected fraction of the second signal component to the optical transmission unit such that its polarization state lies within the second polarization plane.

The optical transmission unit comprises a first reflective SOA and a polarization beam splitter, which are configured in combination to generate the first signal component, as well as a second reflective SOA and a polarization modifying device, which are configured in combination with the polarization beam splitter to generate the second signal component.

The polarization beam splitter and the polarization modifying device are furthermore configured in combination to provide the reflected fraction of the first signal component to the first SOA such that its polarization state lies within the first polarization plane, and to provide the reflected fraction of the second signal component to the second SOA such that its polarization state lies within the first polarization plane.

**Brief description of the drawings**

Figure 1      shows a general structure of a passive optical network.

Figure 2      shows transmission bands used for a passive optical network.

Figure 3      shows a colorless transmitting arrangement according to the prior art.

Figure 4      shows a gain transfer function for operating a semiconductor optical amplifier.

Figure 5      shows a wavelength selection unit according to a preferred embodiment.

Figure 6      shows an optical transmitter arrangement according to a first embodiment.

Figure 7      shows an optical transmission unit according to a second embodiment.

Figure 8      shows an architecture of an optical receiver.

Figure 9      shows alternative embodiments of signal generation units.

Figure 10     shows a table of amplitude levels for modulating signal components.

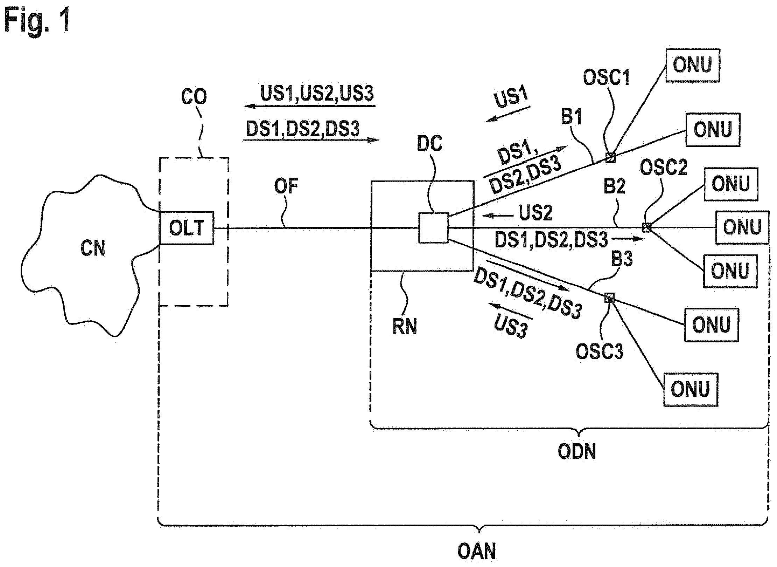

Figure 1 shows a passive optical network PON, which is connected at the central office CO via an optical line terminal (OLT) to a core network CN.

The OLT is connected via an optical feeder fiber OF to a remote node RN. Downstream signals DS1, DS2, DS3 are transmitted at respective downstream wavelengths to the remote node RN.

The branches B1, B2, B3 of the distribution network may themselves contain further splitting units OSC1, OSC2, OSC3 for furthermore splitting the downstream signals. At the end of the optical branches B1, B2, B3, customer sided access network termination units in the form of optical network units ONU are connected, which are alternatively Optical Network Terminals (ONT).

The distribution of the downstream signals DS1, DS2, DS3 is performed by the optical splitting unit OSC, which splits the downstream signals DS1, DS2, DS3 onto the branches B1, B2, B3. The optical splitting units OSC1, ..., OSC3 may split the downstream signals by means of power splitting, such that each of the downstream signals DS1, DS2, DS3 is split onto each of the branches B1, B2, B3. Each downstream signal DS1, DS2, DS3 of a specific wavelength carries one or more date signals that are assigned to one or more ONUs. Each ONU is assigned a specific downstream wavelength. The remote node RN receives the downstream signals and distributes them onto the optical branches B1, B2, B3 that are connected to the remote node RN.

According to a first solution, shown in Figure 1, the remote node RN contains as an optical splitting unit OSC a power splitter, which splits the power of all downstream signals DS1, DS2, DS3 with all wavelengths onto all branches B1, B2, B3 that are connected to the remote node RN. According to this first solution, all ONUs receive all downstream signals at all downstream wavelengths.

According to a second solution, not explicitly shown in Figure 1, the remote node contains as an optical splitting unit OSC an optical filter in the form of an optical wavelength multiplexer/demultiplexer, which splits the downstream signals DS1, DS2, DS3 such that the specific downstream signal with the specific wavelength that carries data signals assigned to one or more specific ONUs is provided only onto this specific branch of these specific ONUs. The optical wavelength multiplexer/demultiplexer is preferably an Arrayed Waveguide Grating (AWG). According to this second solution, an ONU receives a downstream signal only at that downstream wavelength which is assigned to this ONU.

The ONUs transmit respective upstream signals US1, US2, US3 at respective upstream wavelengths that are assigned to the ONUs. The upstream signals US1, US2, US3 are combined by their optical splitting units OSC, OSC1, OSC2, OSC3 and then transmitted over the optical feeder fiber OF to the line terminal OLT.

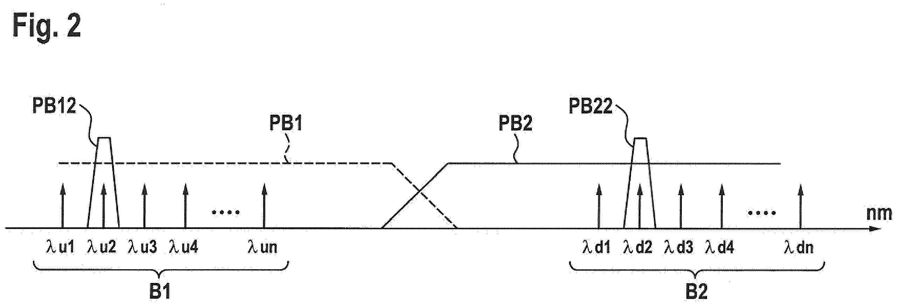

Figure 2 shows an example of upstream wavelengths $\lambda_\cup 1$, $\lambda_\cup 2$, ... $\lambda_\cup n$ that are comprised in a first waveband PB1, whereas the downstream wavelengths $\lambda_d 1$, $\lambda_d 2$, .... $\lambda_d n$ are comprised in a second waveband PB2. The first waveband PB1 and the second waveband PB2 do not overlap. Preferably, the first waveband PB1 is the C-band, whereas the second waveband is the L-band. Adjacent downstream wavelengths $\lambda_d 1$, $\lambda_d 2$, .... $\lambda_d n$ and adjacent upstream wavelengths $\lambda_\cup 1$, $\lambda_\cup 2$, .... $\lambda_\cup n$ are preferably spaced by a same channel spacing.

Coming back to Figure 1, for transmitting upstream signals US1, US2, US3 at respective upstream wavelengths from the ONUs to the OLT, the ONUs need to generate their respective upstream signals US1, US2, US3 at their respective upstream wavelengths assigned to this ONUs.

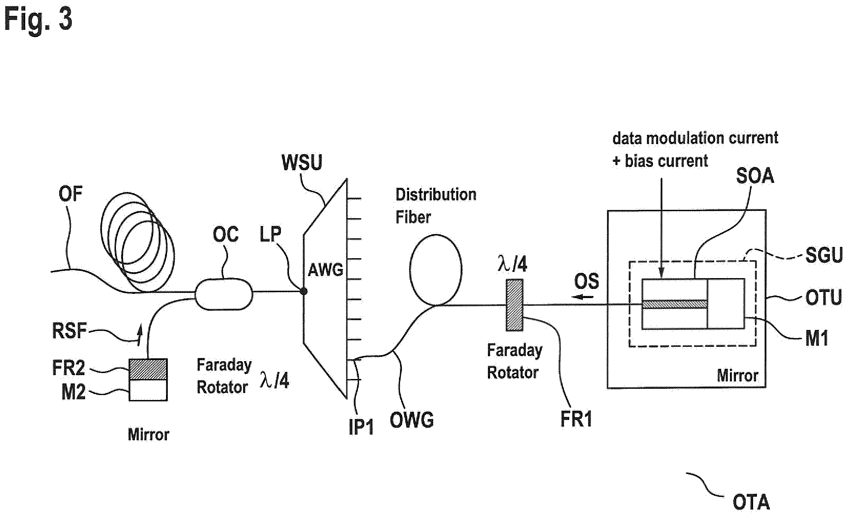

Figure 3 shows an optical transmitter arrangement OTA according to the prior art, that is connected to an optical feeder fiber OF of a passive optical network.

An optical transmission unit OTU contains a signal generation unit SGU that generates an optical signal OS. In detail, the optical transmission unit OTU contains a semiconductor-optical-amplifier (SOA), that performs amplification and modulation of the optical signal. The SOA is preferably a reflective SOA. This is due to the presence of a mirror M1 at one end of the SOA.

The modulation of the optical signal OS is carried out in dependence on transmission data provided to the transmission unit OTU. In detail, the modulation of the optical signal OS is performed, by controlling a driving current of the amplifier SOA. Furthermore, the transmission unit OTU controls a bias of the driving current of the SOA. For doing so, the transmission unit OTU may contain control units not explicitly shown in Figure 3.

The optical signal OS is provided by the transmission unit OTU to a series connection of different elements. The series connection contains a first polarization rotator FR1, an optical waveguide OWG, which is preferably a distribution fiber, a wavelength selection unit WSU, a second polarization rotator FR2 and a mirror M2. With regard to Figure 3 it may be noted that the Faraday rotator FR1 may be an integral part of the optical transmission unit OTU. Alternatively, the Faraday rotator FR1 may be a separate element placed outside the transmission unit OTU.

Preferably, the wavelength selection unit WSU is an AWG, wherein the line port LP of the AWG is connected to the optical feeder fiber OF.

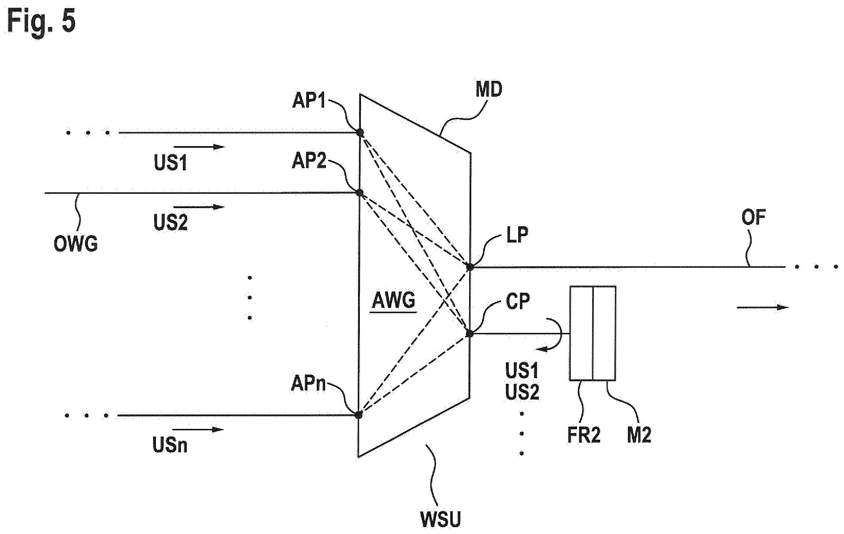

According to the solution shown in Figure 3, the optical feeder fiber OF is connected to the line port LP via an optical coupler OC. Furthermore, according to the solution of Figure 3, the second polarization rotator FR2 and the mirror M2 are also coupled by means of the optical coupler OC to the line port LP. An alternative solution of optically coupling the optical feeder fiber, the polarization rotating device FR2 and the mirror M2 to the arrayed waveguide grating as the wavelength selection unit WSU will be later on described with regard to Figure 5.

The polarization rotating devices are preferably Faraday rotators FR1, FR2, which perform a polarization rotation onto an optical signal by +/- 45° per pass.

The optical signal OS passes from the polarization rotator FR1 via the optical waveguide OWG to an input port IP1 of the AWG. For the purpose of explanation, it shall be assumed that the input port IP1 performs optical filtering as indicated by the passband PB12 in Figure 2. Thus, only an optical signal of the wavelength $\lambda_\cup 2$ is allowed to propagate from the input port IP1 to the line port LP.

At the optical coupler OC a fraction of the optical signal OS is coupled out and provided to the combination of the polarization rotator FR2 and the mirror M2. The reflected signal fraction RSF then propagates back along the series connection to the optical transmission unit OTU, where it finally reaches the transmission unit OTU. Due to the fact, that the signal generation unit SGU of the transmission unit OTU contains a mirror M1, the optical transmission unit OTU and the mirror M2 of the optical transmitter arrangement OTA form a cavity. The wavelength for this cavity is defined by the transmission function PB12 shown in Figure 2 of the input port IP1 chosen for connection of the transmission unit OTU to the arrayed waveguide grating as the wavelength selection unit WSU.

Due to the transfer function PB12 of Figure2 of the chosen port IP1, the optical signal OS will take on a wavelength in the range of lambda $\lambda_\cup 2$. Thus, for data transmission, the optical signal OS may be modulated by the SOA in its amplitude for data transmission from the transmission unit OTU via the optical feeder fiber OF to an OLT not shown explicitly in Figure 3.

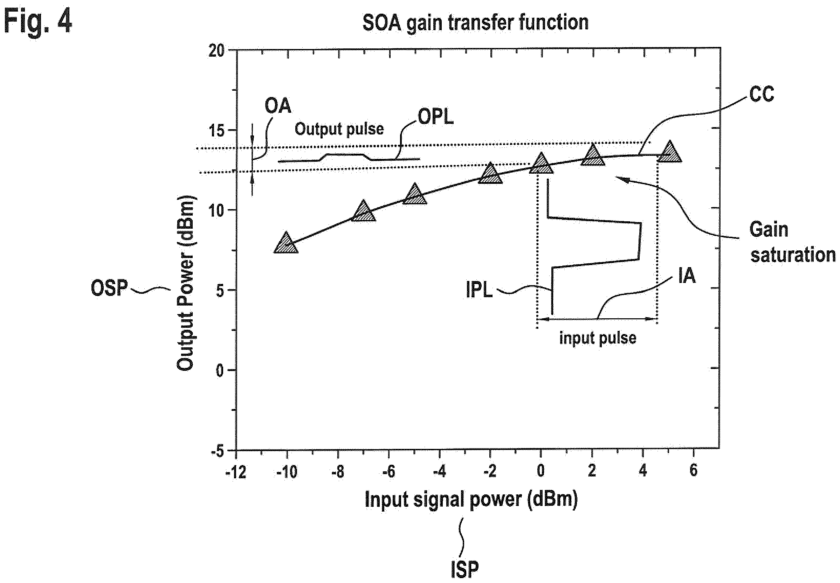

The SOA is not only used for modulation of the optical signal in its amplitude, but also for removing a remaining modulated amplitude present within the reflected signal fraction RSF. For this purpose, the SOA is operated in a saturation state as now described with regard to Figure 4.

Figure 4 shows a characteristic curve CC describing for the amplifier SOA of Figure 3 the relationship between input signal power ISP, given by the reflected signal fraction RSF of Figure 3, and output signal power OSP, given by the optical signal OS.

The amplifier is operated in a saturation state, such that an amplitude modulation present within the reflected signal fraction RSF is essentially cancelled. Figure 4 shows an input modulation amplitude IA of an input pulse IPL as well as an output modulation amplitude OA of an output pulse OPL. It is evident, that by operating the amplifier in the saturation state, the input modulation amplitude IA of the reflected signal is essentially removed, such that the output modulation amplitude OA is neglectable in comparison to the input modulation amplitude.

To summarize the above, the optical transmission unit OTU of Figure 3, which may be considered as an optical network unit ONU, can be seen as a so called self-tuning directly modulated laser, wherein the self-tuning indicates that the laser will tune to a frequency depending on the passband function of the wavelength selection unit WSU.

Using an AWG as the wavelength selection unit WSU has the advantage, that not only a single optical transmitter OTU as a single ONU may be connected to the optical feeder fiber OF, but multiple optical transmitters as multiple ONUs may be connected to the optical feeder fiber OF for transmitting different optical upstream signals at different respective wavelengths, which are defined by the respective passband characteristics of the respective port of the AWG.

In general, it would be also possible to use as the wavelength selection unit WSU a single optical filter of a single passband for transmitting an optical data signal from one single transmission unit into the optical feeder fiber OF.

According to Figure 3, the polarization rotator FR2 and the mirror M2 are optically coupled to the AWG at the line port LP via an optical coupler OC. Figure 5 shows an alternative solution for coupling the polarization rotator FR2 and the mirror M2 to the wavelength selection unit WSU. The wavelength selection unit WSU is preferably an AWG having a network sided line port LP and a network sided cavity port CP. Furthermore, the AWG has a number of n-different transmitter sided ports AP1, AP2, ..., APn. The AWG is preferably an athermal AWG. At the different transmitter sided ports AP1, AP2, ..., APn, respective upstream signal US1, ..., USn may be received from respective optical transmission units. In the examples from Figure 5, the optical waveguide OWG is connected to the transmitter sided port AP2.

The passband transfer functions for the upstream signals of the AWG may be for example such as shown in Figure 2 as the passband functions of the passband PB1 with the specific passband function PB12 of the transmitter-sided port AP2 of Figure 5. In the case that the AWG is a cyclic AWG, each transmitter-sided port AP1, ..., APn has not only got one passband transfer function PB12 within the passband PB1 of Figure 2, but at least one further passband transfer function PB22 as shown in Fig 2. Such corresponding passband transfer functions PB12 and PB22 of a port AP2 are preferably separated by a free spectral range of the cyclic AWG.

Coming back to Figure 5, the line-port LP is preferably a port at which an m-th diffraction order (m being equal to 0, 1, 2, etc.) of optical upstream signals US1, ..., USn , which enter the AWG through the transmitter-sided ports AP1, ..., APn, and which have wavelengths equal to the respective upstream wavelengths of these port, focuses.

Furthermore, the cavity port CP is preferably a port at which an (n+k)th or (n-k)th diffraction order (k being an integer equal to or higher than 1, preferably equal to 1) of optical signals, which enter the AWG through the transmitter-sided ports AP1, ..., APn and have wavelengths corresponding to the respective downstream wavelengths of the passband PB2 or Figure2, focuses. The line port LP is connected to the optical feeder fiber OF while the cavity port CP is connected to the combination of the polarization rotator FR2 and the mirror M2.

Coming now back to Figure 3, it was previously mentioned, that each of the Faraday rotators FR1, FR2 cause a polarization rotation onto the signals OS o RSF by +/-45° or +/- $\lambda/4$ per pass. The optical transmission line that is formed between the optical transmission unit OTU and the mirror M2 can be considered as a retracing optical fiber circuit due to the fact that the Faraday rotator FR1 and FR2 cause an overall polarization rotation by 180° when starting signal propagation at the transmission unit OTU, propagating to the mirror M2 and then coming back to the transmission unit OTU. In such a retracing optical fiber circuit, polarization variations, that are caused by the optical transmission elements such as for example the optical waveguide OWG onto the optical signal OS propagating from the transmission unit OTU to the mirror M2 by birefringent changes occurring within the fiber OWG, will be reciprocal to polarization variations caused onto the reflected signal fraction RSF, since the birefringent changes occurring within the fiber OWG acting on the retransmitted signal fraction RSF are reciprocal to the ones acting on the optical signal OS. Such an effect is outlined in detail in the publication "Polarization noise suppression in retracing optical fiber circuits, N.C. Pistoni and M. Martinelli, OPTICS LETTERS, Vol. 16, No. 10, May15, 1991". Thus, the reflected signal fraction RSF reaching the transmission unit OTU has a polarization state that lines in the same polarization plane as the signal OS transmitted by the transmission unit OTU.

While performing modulation of the optical signal at the specific baud rate using binary amplitude modulation, the maximum data rate that may be achievable by such a system as shown in Figure 3 for a given allowable bit error ratio at a receiving site is limited by dispersion effects of the different optical elements within the passive optical network due to a combination of a large line-width of the optical signal associated with the effects of lasing within an extended cavity, including the distribution fiber DF, as well as modulation chirp. For further details see "L. Marazzi, P. Parolari, M. Brunero, A. Gatto, M. Martinelli, R. Brenot, S. Barbet, P. Galli and G. Gavioli, 'Up to 10.7-Gb/s High-PDG RSOA-Based Colorless Transmitter for WDM Networks', IEEE Photonics Technologies Letters, Volume 25, Number 7, Pages: 637-640, April 2013".

Thus, when aiming to increase a data rate for the system given in Figure 3, simply increasing the modulation rate as the baud rate while still aiming to maintain an allowable bit error ratio is not a feasible solution, since with an increased modulation rate or baud rate also the effect of dispersion increases, such that the allowable bit error ratio may be exceeded. In general, one may say that the dispersion penalties grow quadratically with the modulation baud rate.

One approach to increase the data rate while operating at the same baud rate would be to utilize a multi-level modulation format. However, using a multi-level modulation format is not compatible with the principle of the operation of the system as shown herein. The signal generation unit SGU is responsible for removing the remaining amplitude of the reflected signal fraction RSF, while it has to be noted with regard to Figure 4, that the transfer function of the SOA exhibits only one saturation level. For this reason, an SOA may only be used for generating a binary modulation pattern, but not for effectively removing a remaining amplitude within a multi-level pattern signal.

Furthermore, the transfer function of an SOA as an optical modulator is non-linear with regard to electrical input power and optical output power and thus will require sophisticated electrical signal pre-distortion processing for enabling multi-level electro-optical modulation. This is a non-trivial operation at high bit rates. Thus, for increasing the data rate of a system as shown in Figure 3, it is not a desirable solution to simply increase the modulation rate or to switch to multi-level modulation formats.

## Description of embodiments

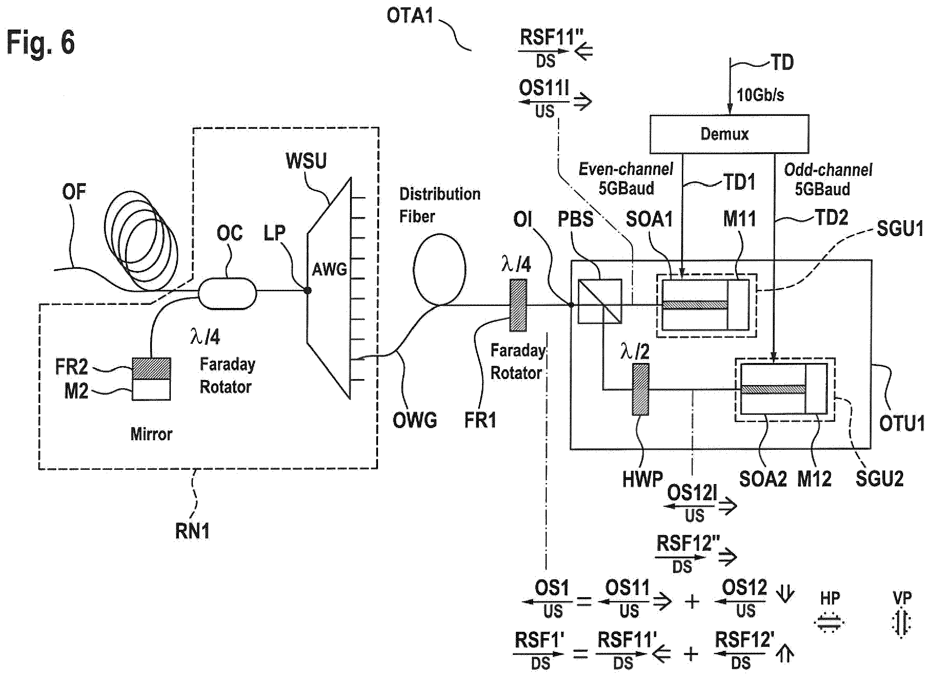

Figure 6 shows an optical transmitter arrangement OTA1 as proposed herein according to a first embodiment.

The optical transmission unit OTU1 contains a signal generation unit SGU1, which in turn contains a semiconductor optical amplifier SOA1 and a mirror M11. The mirror M11 may be in particular a part of the SOA1 making the SOA1 a reflective SOA. The transmission unit OTU1 contains a signal generation unit SGU2, which in turn contains a semiconductor optical amplifier SOA2 with a mirror M12, making the amplifier SOA2 a reflective SOA.

Preferably, the amplifiers SOA1 and SOA2 are polarization-dependent gain amplifiers, which exhibit a maximum amplification for a preferred polarization plane, which is preferably a horizontal polarization plane HP as indicated in Figure 6.

The amplifier SOA1 generates an initial optical signal component OS11I in the upstream direction US, which lies in the horizontal polarization plane HP. This initial signal component OS11I passes the polarization beam splitter PBS without any change of polarization; thus, the amplifier SOA1 and the polarization beam splitter PBS generate in combination the signal component OS11 in the upstream direction US with the polarization state in the horizontal polarization plane HP.

The amplifier SOA2 generates an initial signal component OS12I in the upstream direction US, which has a polarization state that lies within the polarization plane HP as the horizontal polarization plane. This signal component OS12I passes a polarization modifying device, preferably a half wave plate HWP, which causes a rotation of polarization onto an optical signal by +/- 90° or +/- $\lambda$/2 per pass. Thus, the resulting signal component OS12 resulting from the initial signal component OS12I in the upstream direction US has a polarization state that lies within the vertical polarization plane VP.

In other words, the amplifier SOA2, the polarization modifying device HWP and the polarization beam splitter PBS are configured in combination to generate the signal component OS12.

The signal components OS11 and OS12 have the same wavelength but polarization states that lie within orthogonal polarization planes.

The signal OS1 containing the signal components OS11 and OS12 in the upstream direction US propagates from the optical transmission unit OTU1 via the polarization rotator FR1, the optical wave guard OWG and the wavelength selection unit WSU to the polarization rotating device FR2 and the mirror M2. As previously described above, the polarization rotator FR2 and the mirror M2 are preferably coupled to the wavelength selection unit WSU via an optical coupler OC or, alternatively, are coupled to a cavity port of an AWG as the wavelength selection unit WSU, as previously described with regard to Figure 5.

Due to the fact that the amplifiers SOA1 and SOA2 of the signal generation units SGU1 and SGU2 within the transmission unit OTU1 contain respective mirrors M11 and M12, a cavity is formed by the transmission unit OTU1 and the mirror M2.

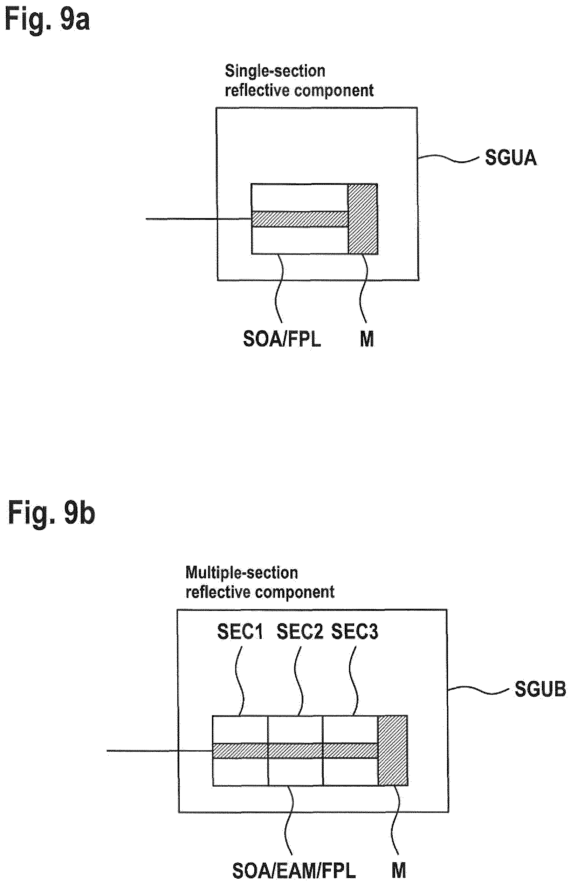

Alternative embodiments for the signal generation units SGU1 and SGU2 will be described with regard to Figure 9a and Figure 9b later on.

As previously described above, the polarization rotator FR1 may be an integral part of the transmission unit OTU1 or alternatively a separate device directly coupled optically to the optical interface OI of the transmission unit OTU1. The polarization rotator FR1, the optical waveguide OWG, the wavelength selection unit WSU and the polarization rotator FR2 together with the mirror M2 form a series connection. The rotator FR1 is placed upstream of the transmission unit OTU1, the optical waveguide OWG is placed upstream of the rotator FR1, the wavelength selection unit WSU is placed upstream of the optical waveguide OWG, the rotator FR2 is placed upstream of the wavelength selection unit WSU and the mirror M2 is directly coupled to the rotator FR2 upstream of the rotator FR2.

The series connection mentioned above is configured and arranged, such that a reflected fraction RSF1 of the signal OS1 is provided back to the optical transmission unit OTU1 in the downstream direction. As previously described above, the series connection mentioned above forms a fiber retracing circuit. The reflected signal fraction RSF1 of the signal OS1 reaches the transmission unit OTU1 with specific properties as described with regard to the reflected signal fraction RSF1' in the downstream direction DS now herein.

The property of the series connection as a fiber retracing circuit is preserved, as long as the roundtrip time from the transmission unit OTU1 to the mirror M2 and back to the transmission unit OTU1 is lower than the time for polarization variations occurring within the series connection forming the cavity, which is a condition that is satisfied for cavity length of 0 km, preferably up to 20 km.

A reflected signal fraction RSF11' as a reflected fraction of the signal component OS11 is provided to the transmission unit OTU1, such that its polarization state lies within the horizontal polarization plane HP. Furthermore, a reflected signal fraction RSF12' as a reflected fraction of the signal component OS12 in the downstream direction DS is provided to the transmission unit OTU1, such that its polarization state lies within the vertical polarization plane VP.

The signal fraction RSF11' passes the polarization beam splitter PBS in the horizontal polarization plane HP and thus forms the signal fraction RSF11" in the downstream direction DS, which then reaches the amplifier SOA1.

The signal fraction RSF12' is provided by the polarization beam splitter PBS to the half wave plate HWP as the polarization modifying device, wherein this half wave plate causes a rotation of the polarization state from the signal fraction RSF12' by 90° or $\lambda/2$. The resulting signal fraction RSF12" traveling in the downstream direction DS then has a polarization state that lies within the horizontal polarization plane HP before reaching the amplifier SOA2.

In other words, the polarization beam splitter PBS and the polarization modifying device HWP are configured in combination to provide the reflected fraction RSF11' of the signal component OS11 to the amplifier SOA1, such that the polarization state of the reflected fraction RSF11' lies within the horizontal polarization plane HP. Furthermore, the polarization beam splitter PBS and the polarization modifying device HWP are configured in combination to provide the reflected signal fraction RSF12' to the amplifier SOA2, such that the polarization state of the signal fraction RSF12', now given as the signal fraction RSF12", lies within the same polarization plane as the polarization plane HP.

The proposed architecture for a transmission unit OTU1 enables using polarization-dependent gain devices for the amplifiers SOA1 and SOA2, while preserving polarization in sensitive operation of the laser cavity formed by the series connection.

The proposed architecture furthermore allows to use a transmission unit OTU1, which closes the cavity loop from the transmission unit OTU1 to the mirror M2 without additional power losses with respect to the solution shown in Figure 3 and to maintain the constant polarization states at the amplifiers SOA1 and SOA2.

The transmission unit OTU1 receives transmission data TD, which is transmitted in that the amplifiers SOA1 and SOA2 modulate the amplitudes of the respective signal components OS11 and OS12 generated directly or indirectly by the amplifiers SOA1 and SOA2. The amplifier SOA1 modulates the initial signal components OS11I in its amplitude in dependence on transmission data TD1, while the amplifier SOA2 modulates the initial signal component OS12I in dependence on transmission data TD2. Preferably, the transmission data TD1 and the transmission data TD2 is transmission data obtained by demultiplexing transmission data TD that is provided at 10 GB/sec. Thus, according to the example shown in Figure 6, the transmission data TD2 and TD1 have respective data rates of preferably 5 GB/sec.

The amplitude of the signal component OS11I and thus the amplitude of the signal component OS11 depend on the driving current of the SOA1, while the amplitude of the signal component OS12I and thus the amplitude of the signal component OS12 depend on a driving current of the amplifier SOA2.

The architecture of the transmitter unit OTU1 as an element of the transmitter arrangement OTA1 as shown in Figure 6 has been proven to allow, for example, a data rate of 10 GB/sec over a transmission distance of 20 km as the distance from the transmitter unit OTU1 to an OLT at the end of the optical feeder fiber for a specific choice of parameters such as, for example, an allowable bit error ratio. For the same choice of parameters, the system shown in Figure 3 as the prior art has been proven to transmit only 5 GB/sec for a transmission distance of 20 or even 24 km. In comparison to the system of the prior art from Figure 3, the system shown in Figure 5 proposed herein allows to reach a data rate of 10GB/sec over 20 km as a transmission distance and thus is of a higher performance than the system according to the prior art as shown in Figure 3.

To outline the achieved advantages of the system proposed as described with regard to Figure 6, one may consider the associated power dispersion penalty as defined via

$$\delta_d = -5\log_{10}\left[1 - \left(4BLD\sigma_\lambda\right)^2\right] \qquad \text{(eq-1)}$$

Herein, $\delta_d$ is the dispersion penalty (dB), B is the Baud-rate, L is the transmission distance, D is the fibre dispersion coefficient and $\sigma_\lambda$ is the laser source spectral width. Thus, by reducing the Baud-rate B from 10 Gigbit/s for the system of Figure 3 to 5 Gigbit/s for the system of Figure 5, the dispersion penalty $\delta_d$ is cut to half allowing to increase the transmission distance L by a factor of two. Once again it has to be mentioned, that transmitting the signal component OS11 in one polarization plane does not affect the dispersion penalties of the other signal component OS12 in the other, orthogonal polarization plane.

Due to the fact that the baud rate for each polarization channel is kept constant and furthermore due to the fact that the dispersion effect in one polarization channel is independent of the dispersion affecting the other polarization channel, the system described in Figure 6 allows to double the data rate or baud rate in comparison to the system known from the prior art as shown in Figure 3.

Due to the fact that each amplifier SOA1 and SOA2 will be visited only by one respective signal component RSF11" and RSF12" and given that each of this single component is modulated only with a binary pattern, the functionality of the amplifiers regarding saturation and modulation are not compromised and the capabilities of the transmission unit OTU1 for each of the polarization channels is fully preserved.

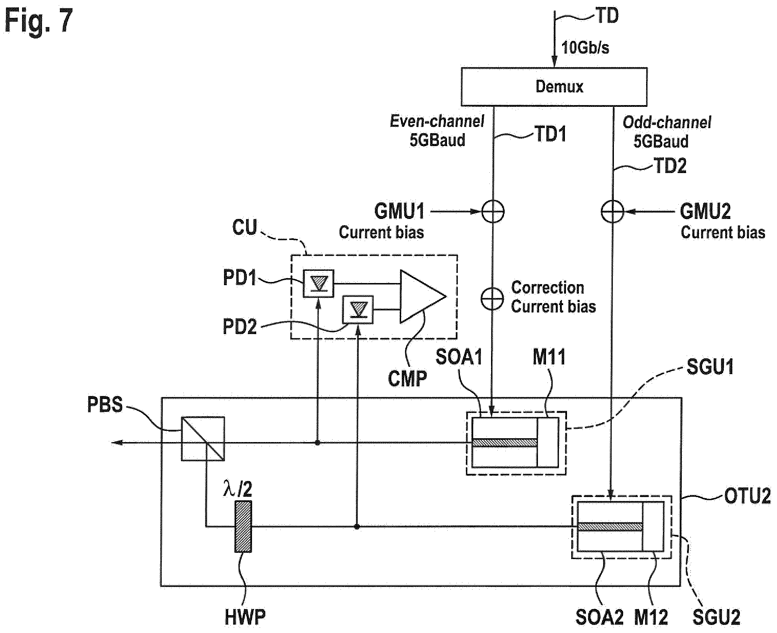

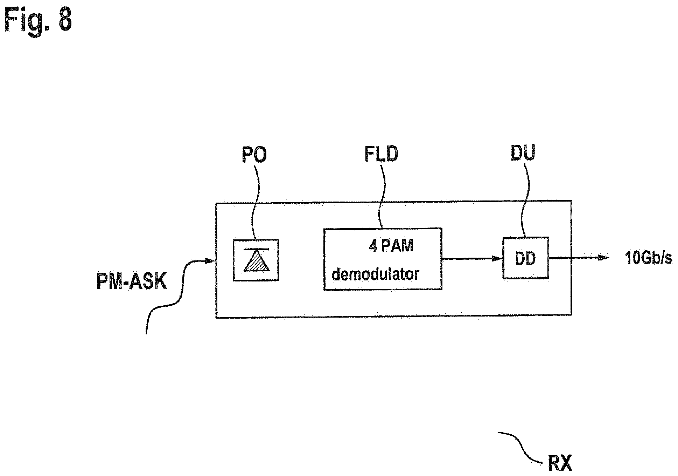

Polarization multiplexed signals as described with regard to Figure 6 may be received at a receiving side and then be subject to signal processing for the purpose of polarization demultiplexing. Such signal processing may include an algorithm such as the constant modulus algorithm needed for polarization demultiplexing of the different signal components used for data transmission. Performing digital signal processing at a receiving site is a very costly solution. Thus, a further modification of the transmission unit is proposed as outlined with regard to Figure 7 for using a simpler receiver as described later on with regard to Figure 8.

Figure 7 shows an optical transmission unit OTU2 which is in principle similar to the transmission unit OTU1, previously described with regard to Figure 6. In addition, the transmission unit OTU2 contains a control unit CU, which measures a time-averaged amplitude of the signal component generated by the amplifier SOA1. Thus, the control unit CU measures a time-averaged amplitude of the signal component indicated as the signal component OS11I shown in Figure 6.

Furthermore, the control unit CU is able to measure a time-averaged amplitude of the signal component generated by the amplifier SOA2. Thus, the control unit CU is able to measure a time-averaged amplitude of the signal component as the signal component OS12I shown in Figure 6.

As previously indicated in Figure 3, a current driving an amplifier such as the amplifiers SOA1 and SOA2 of Figure 6 or Figure 7 may by a current that consists of a data modulation current as well as a bias current.

The control unit CU of Figure 7 controls a bias of the driving current of the amplifier SOA1 and/or a bias of the driving current of the amplifier SOA2, such that the ratio of the output power of the signal component OS11 versus the output power of the signal component OS12 takes on a predefined value. The predefined value is preferably the value of 2 or 1/2.

The control unit CU contains in the example shown in Figure 7 measurement devices such as photodiodes PD1 and PD2 for converting the optical signal components to electrical signal components, which in turn are then provided to a comparator CMP that applies a correction current bias to the driving current of the amplifier SOA1. While in the example shown in Figure 7 the control unit CU controls only the bias current of the amplifier SOA1, it is evidence for a person skilled in the art, that the control unit CU may also or alternatively control the bias current of the amplifier SOA2.

The photodiodes PD1 and PD2 are preferably low-speed power monitor photodiodes causing a time-averaged measurement of the amplitude levels of the respective signal component measured by the photodiodes PD1 and PD2.

Furthermore, the comparator CMP may exhibit a low-pass filtering property at the inputs receiving the converged electrical signal components.

The control unit CU may be an integral part of the transmitting unit OTU2.

Preferably, the amplitudes of the signal components OS11 and OS12 are controlled via the bias currents of the respective amplifiers SOA1 and SOA2. The controlling is carried out, such that the ratio of the output power of the first signal component OS11 versus the output power of the second signal component OS12 takes on a predefined value. Assuming $A_1^s$ as the amplitude of the signal component OS11 and $A_2^s$ as the amplitude of the signal component OS12, then the biases of the driving currents of the amplifier SOA1 and SOA2 respectively are controlled, such that the output power of the signal component OS12 is half of the output power of the signal component OS11 as

$$\left|A_1^s\right|^2 = 2\left|A_2^s\right|^2.$$

At a receiving side, the two polarisation-multiplexed signal components OS11 and OS12 may be jointly detected in a single photodiode as it will be explained in detail now on.

The signal components OS11 and OS12 are transmitted as the combined signal OS1. At a receiving side, indicated by the index RX, the received optical signal generates an electrical current $i(t)$ that is proportional to the square of the absolute value of the received optical field $E_{RX}{}^s$ as

$$i(t) = R_p \left| E_{RX}{}^s \right|^2 + \eta_q(t)$$

Herein, $R_p$ is the photodetector responsivity and $\eta_q$ is the quantum noise.

At the transmitting side, indicated by the index TX, the overall optical field $E_{TX}{}^s$ of the signal OS1 is composed of the two polarisation-multiplexed signal components OS11 and OS12 with their respective amplitudes $A_1^s$ and $A_2^s$, which can be expressed as:

$$E_{TX}{}^s = \begin{bmatrix} E_x \\ E_y \end{bmatrix} = \begin{bmatrix} A_{1\,s}^s \sqrt{m_{odd}(t)} e^{j\omega t} \, \hat{x} \\ A_{2\,s}^s \sqrt{m_{even}(t)} e^{j\omega t} \, \hat{y} \end{bmatrix}$$

Herein, $\hat{x}$ and $\hat{y}$ are the two unit vectors for the field in the direction of the fibre principal polarisation states, while $m_{odd}(t)$ and $m_{even}(t)$ are the digital modulating signals carrying the odd and even binary sequences $a_k$ & $b_k$ (= 0,1), used to modulate the two signal components OS11 and OS12 at the time instant t.

Due to fibre bi-refringerence the transmitted signal is subject to random polarisation rotations, such that a resulting polarized optical field at the receiving side can be expressed as:

$$E_{RX}{}^s = E_{TX}{}^s [J] = E_{TX}{}^s \begin{bmatrix} \cos(\varphi) e^{j\psi_1} & \sin(\varphi) e^{j\psi_2} \\ -\sin(\varphi) e^{-j\psi_2} & \cos(\varphi) e^{-j\psi_1} \end{bmatrix}$$

Herein, [J] is the fibre Jones matrix with parameters $\phi$, $\psi_1$ and $\psi_2$ within the range of 0 to $2\pi$.

Given that the absolute value of the electrical field $E_{RX}{}^s$ at the receiving side does not depend on the polarisation state of the optical signal OS1

$$\left| E_{RX}{}^s \right| = \left| E_{TX}{}^s [J] \right|$$

then due to $|[J]|^2 = 1$, the resultant photodetector electrical signal i(t) is given by:

$$i(t) = R_p \left| E_{TX}{}^s [J] \right|^2 + \eta_q(t) = R_p \left| E_{RX}{}^s \right|^2 + \eta_q(t) = R_p \sum_{k=1}^{2} \left( e_k^s \right)^2 + \eta_q(t)$$

with

$$e_1^s(t) = A_{1\,s}^s \sqrt{m_{odd}(t)} + \eta_1^{sp}(t) = A_{1\,s}^s \sqrt{\sum_{k=-\infty}^{\infty} a_k \, rect_T(t - kT)} + \eta_1^{sp}(t)$$

$$e_2^s(t) = A_2^s \sqrt{m_{even}(t)} + \eta_2^{sp}(t) = A_2^s \sqrt{\sum_{k=-\infty}^{\infty} b_k \, rect_T(t - kT)} + \eta_2^{sp}(t)$$

wherein $\eta^{sp}$ is the optical noise present on the received optical field. Furthermore, the digital modulating signals $m_{odd}(t)$ and $m_{even}(t)$ are assumed to be rectangular functions $rect_T$ in time.

As shown above, the resultant photodetector electrical signal is proportional to the superposition of the two polarisation multiplexed components OS11 and OS12. Thus, if a simple amplitude-level coding scheme is employed onto these signal components OS11 and OS12 at the transmitting side, such that the two polarisation-multiplexed optical signals have a different peak intensity in correspondence to a logical one (for instance $\left|A_1^s\right|^2 = 2\left|A_2^s\right|^2$ ), then the electrical signal generated at the photodetector output will appear as a 4-levels PAM (Pulse Amplitude Modulation) independently of the received signal polarisation state, and can be efficiently demodulated using a standard 4-level demodulator. This enables a simple direct-detection receiver to demodulate a polarisation-multiplexed signal without the need of any polarisation detection or tracking scheme.

By controlling the amplitude-levels of the two signal components as proposed, the resulting optical signal OS1 - or the resulting optical field of the optical signal - may be converted at a receiving side independently of its polarisation state into a 4-level pulse-amplitude modulation using a single photodiode.

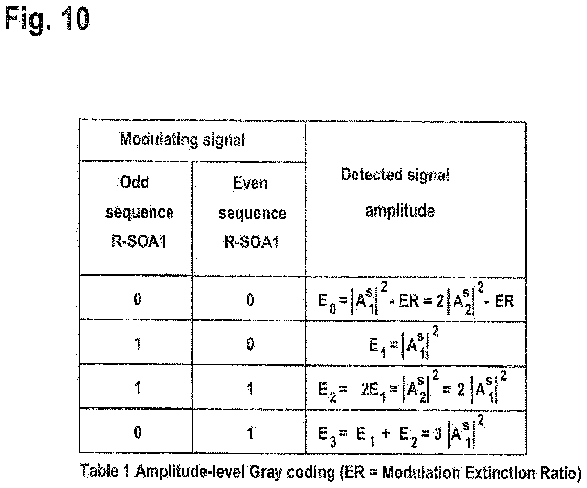

Table 1 in Figure 10 shows an example in the case that an amplitude-level Gray coding is used when keeping the signal power of the component OS12 to half of the signal power of the component OS11, e.i. $\left|A_1^s\right|^2 = 2\left|A_2^s\right|^2$.

As shown in Table 1 of Figure 10, the resultant 4-level electrical signal can then be demodulated using a standard 4-PAM electrical demodulator as shown in Figure 8. No tracking or optical demultiplexing of signal polarisation is required, significantly simplifying the receiver architecture with respect to a polarisation diverse receiver that would require digital signal processing.

For the case of PDM receivers being used, which perform signal processing, various examples of PDM receivers exist and may, for example, be implemented according to the references 'S. Savory, G. Gavioli, R. I. Killey, P. Bayvel, "Electronic compensation of chromatic dispersion using a digital coherent receiver", Optics Express, Volume 15, Number 5, Pages: 2120-2126, Feb. 2007' or 'R. Nagarajan et al., "10 Channel, 45.6 Gb/s per Channel, Polarization-Multiplexed DQPSK, InP Receiver Photonic Integrated Circuit", Journal of Lightwave Technology, Volume 29, Number 4, Pages: 386-395, Feb. 2011'. This involves a higher complexity in the design of the receiver blocks.

For the given choice of amplitudes as described above, the resulting four level electrical signal can then be demodulated using a standard four level electrical demodulator as shown in Figure 8. No tracking or optical demultiplexing of signal polarization is required. The receiver RX shown in Figure 8 receives the resulting signal PM/ASK and converts it from the optical to the electrical domain using a four level demodulator FLD followed by a decision unit DU.

Figures 9a and 9b show different embodiments of signal generation units that may be used within the proposed transmission units OTU1 or OTU2 of Figure 6 or Figure 7.

The signal generation unit SGUA is identical in structure to the generation unit SGU1 and SGU2 of Figure 6, and may preferably be realized with an SOA or a Fabry Perot Laser.

Alternatively, such a signal generation unit SGUA may be replaced by a signal generation unit SGUB as shown in Figure 9b, which contains more than one amplifier, wherein one amplifier section SEC1 is used for modulating a signal and another amplifier section SEC2 is used for saturation and removing a remaining amplitude in a reflected signal fraction and a further amplifier section SEC 3 is used for amplifying the signal itself. The different amplifier section may be realized with one or more SOAs and/or one or more Fabry Perot Lasers.

## Claims

1. Optical transmitter arrangement, comprising

   - an optical transmission unit (OTU1, OTU2) operable to generate an optical signal (OS1) comprising a first signal component (OS11) having a polarization state that lies within a first polarization plane (HP) and furthermore comprising a second signal (OS12) component having a polarization state that lies within a second polarization plane (VP) orthogonal to said first polarization plane (HP),
   - a series connection comprising a first polarization rotator (FR1), an optical waveguide (OWG), a wavelength selection unit (WSU), a second polarization rotator (FR2) and a mirror (M2),

   wherein said optical transmission unit (OTU1, OTU2) and said mirror (M2) form a cavity, wherein said series connection is configured

   - to provide a reflected fraction of said first signal component (RSF11') to said optical transmission unit (OTU1, OTU2) such that its polarization state lies within said first polarization plane (HP),
- and furthermore to provide a reflected fraction of said second signal component (RSF12') to said optical transmission unit (OTU1, OTU2) such that its polarization state lies within said second polarization plane (VP),

**characterized in that** said optical transmission unit (OTU1, OTU2) comprises

- a first reflective SOA (SO1) and a polarization beam splitter (PBS), configured in combination to generate said first signal component (OS11),
- a second reflective SOA (SOA2) and a polarization modifying device (HWP), configured in combination with said polarization beam splitter (PBS) to generate said second signal component (OS12),

wherein said polarization beam splitter (PBS) and said polarization modifying device (HWP) are furthermore configured in combination to provide

- said reflected fraction of said first signal component (RSF11') to said first SOA (SOA1) such that its polarization state lies within said first polarization plane (HP),
- and to provide said reflected fraction of said second signal component (RSF12') to said second SOA (SOA2) such that its polarization state lies within said first polarization plane (HP).

2. Optical transmitter arrangement according to claim 1,
wherein said first SOA (SOA1) is operable to modulate the amplitude of said first signal component (OS11) in dependence on first data bits,
and wherein said second SOA (SOA2) is operable to modulate the amplitude of said second signal component (OS12) in dependence on second data bits.

3. Optical transmitter arrangement according to claim 2,
wherein said amplitude of said first signal component (OS11) depends on a driving current of said first SOA (SOA1),
wherein said amplitude of said second signal component (OS12) depends on a driving current of said second SOA (SOA2),
wherein said optical transmission unit (OTU1, OTU2) comprises furthermore a control unit (CU) that is operable

- to measure a time-averaged amplitude of said first signal component (OS11),
- to measure a time-averaged amplitude of said second signal component (OS12),
- and to control a bias of said driving current of said first SOA (SOA1) and/or a bias of said driving current of said second SOA (SOA2), such that the ratio of the output power of said first signal component (OS11) versus the output power of said second signal component (OS12) takes on a predefined value.

4. Optical transmitter arrangement according to claim 3,
wherein said predefined value is the value of 2 or ½.

5. Optical transmitter arrangement according to claim 1,
wherein said SOAs (SOA1, SOA2) have respective polarization dependent gain functions.

6. Optical transmitter arrangement according to claim 1,
wherein said wavelength selection unit is an Arrayed Waveguide Grating (AWG),
wherein said optical transmission unit (OTU1, OTU2) is optically coupled via said optical waveguide (OWG) to a transmitter sided port of said Arrayed Waveguide Grating (AWG),
and wherein second polarization rotator (FR2) and said mirror (M2) are optically coupled to a network sided port of said Arrayed Waveguide Grating (AWG).

7. Optical transmitter arrangement according to claim 6,
wherein said network sided port of said Arrayed Waveguide Grating (AWG) is a line port (LP) of said Arrayed Waveguide Grating (AWG),
and wherein said second polarization rotator (FR2) and said mirror (M2) are optically coupled to said line port (LP) via an optical coupler (OC).

8. Optical transmitter arrangement according to claim 6,
wherein said network sided port of said Arrayed Waveguide Grating is a cavity port (CP) of said Arrayed Waveguide Grating.

**9.** Optical transmitter arrangement according to claim 3,
wherein said control unit (CU) comprises low-speed photodiodes (PD1, PD2) for measuring said time-averaged amplitudes.


**Patentansprüche**

**1.** Optische Senderanordnung, umfassend

- eine optische Sendeeinheit (OTU1, OTU2), die betriebsfähig ist zum Erzeugen eines optischen Signals (OS1) mit einer ersten Signalkomponente (OS11), die einen Polarisationszustand aufweist, der in einer ersten Polarisationsebene (HP) liegt, und weiterhin mit einer zweiten Signalkomponente (OS12), die einen Polarisationszustand aufweist, der in einer zweiten Polarisationsebene (VP) liegt, die zu der besagten ersten Polarisationsebene (HP) orthogonal verläuft,
- eine Reihenschaltung mit einem ersten Polarisationsdreher (FR1), einem Lichtwellenleiter (OWG), einer Wellenlängen-Auswahleinheit (WSU), einem zweiten Polarisationsdreher (FR2) und einem Spiegel (M2),

wobei die besagte optische Sendeeinheit (OTU1, OTU2) und der besagte Spiegel (M2) einen Hohlraum bilden, wobei die besagte Reihenschaltung konfiguriert ist

- zum Liefern eines reflektierten Teils der besagten ersten Signalkomponente (RSF11') an die besagte optische Sendeeinheit (OTU1, OTU2), so dass ihr Polarisationszustand in der besagten ersten Polarisationsebene (HP) liegt,
- und weiterhin zum Liefern eines reflektierten Teils der besagten zweiten Signalkomponente (RSF12') an die besagte optische Sendeeinheit (OTU1, OTU2), so dass ihr Polarisationszustand in der besagten zweiten Polarisationsebene (VP) liegt,

**dadurch gekennzeichnet, dass** die besagte optische Sendeeinheit (OTU1, OTU2)

- einen ersten reflektierenden SOA (SO1) und einen Polarisationsstrahlteiler (PBS), die gemeinsam konfiguriert sind zum Erzeugen der besagten ersten Signalkomponente (OS11),
- einen zweiten reflektierenden SOA (SOA2) und eine Polarisationsänderungsvorrichtung (HWP) umfasst, die gemeinsam mit dem besagten Polarisationsstrahlteiler (PBS) konfiguriert sind zum Erzeugen der besagten zweiten Signalkomponente (OS12),

wobei der besagte Polarisationsstrahlteiler (PBS) und die besagte Polarisationsänderungsvorrichtung (HWP) weiterhin gemeinsam konfiguriert sind zum Liefern

- des besagten reflektierten Teils der besagten ersten Signalkomponente (RSF11') an den besagten ersten SOA (SOA1), so dass ihr Polarisationszustand in der besagten ersten Polarisationsebene (HP) liegt,
- und zum Liefern des besagten reflektierten Teils der besagten zweiten Signalkomponente (RSF12') an den besagten zweiten SOA (SOA2), so dass ihr Polarisationszustand in der besagten ersten Polarisationsebene (HP) liegt.

**2.** Optische Senderanordnung nach Anspruch 1,
wobei der besagte erste SOA (SOA1) betriebsfähig ist zum Modulieren der Amplitude der besagten ersten Signalkomponente (OS11) in Abhängigkeit von ersten Datenbits, und wobei der besagte zweite SOA (SOA2) betriebsfähig ist zum Modulieren der Amplitude der besagten zweiten Signalkomponente (OS12) in Abhängigkeit von zweiten Datenbits.

**3.** Optische Senderanordnung nach Anspruch 2,
wobei die besagte Amplitude der besagten ersten Signalkomponente (OS11) von einem Antriebsstrom des besagten ersten SOA (SOA1) abhängt,
wobei die besagte Amplitude der besagten zweiten Signalkomponente (OS12) von einem Antriebsstrom des besagten zweiten SOA (SOA2) abhängt,
wobei die besagte optische Sendeeinheit (OTU1, OTU2) weiterhin eine Steuereinheit (CU) umfasst, die betriebsfähig ist

- zum Messen einer zeitlich gemittelten Amplitude der besagten ersten Signalkomponente (OS11),
- zum Messen einer zeitlich gemittelten Amplitude der besagten zweiten Signalkomponente (OS12),
- und zum Steuern eines Bias des besagten Antriebsstroms des besagten ersten SOA (SOA1) und/oder eines Bias des besagten Antriebsstroms des besagten zweiten SOA (SOA2), so dass das Verhältnis der Ausgangsleistung der besagten ersten Signalkomponente (OS11) zur Ausgangsleistung der besagten zweiten Signalkomponente (OS12) einen vorausdefinierten Wert annimmt.

4. Optische Senderanordnung nach Anspruch 3,
wobei der besagte vorausdefinierte Wert der Wert 2 oder ½ ist.

5. Optische Senderanordnung nach Anspruch 1,
wobei die besagten SOAs (SOA1, SOA2) jeweilige polarisationsabhängige Verstärkungsfunktionen aufweisen.

6. Optische Senderanordnung nach Anspruch 1,
wobei die besagte Wellenlängen-Auswahleinheit ein Arrayed Waveguide Grating (AWG) ist,
wobei die besagte optische Sendeeinheit (OTU1, OTU2) über den besagten Lichtwellenleiter (OWG) optisch an einen senderseitigen Port des besagten Arrayed Waveguide Grating (AWG) gekoppelt ist,
und wobei der zweite Polarisationsdreher (FR2) und der besagte Spiegel (M2) optisch an einen netzwerkseitigen Port des besagten Arrayed Waveguide Grating (AWG) gekoppelt sind.

7. Optische Senderanordnung nach Anspruch 6,
wobei der besagte netzwerkseitige Port des besagten Arrayed Waveguide Grating (AWG) ein Leitungs-Port (LP) des besagten Arrayed Waveguide Grating (AWG) ist, und wobei der besagte zweite Polarisationsdreher (FR2) und der besagte Spiegel (M2) optisch an den besagten Leitungs-Port (LP) über einen Optokoppler (OC) gekoppelt sind.

8. Optische Senderanordnung nach Anspruch 6,
wobei der besagte netzwerkseitige Port des besagten Arrayed Waveguide Grating ein Kavitäts-Port (CP) des besagten Arrayed Waveguide Grating ist.

9. Optische Senderanordnung nach Anspruch 3,
wobei die besagte Steuereinheit (CU) Niedergeschwindigkeits-Photodioden (PD1, PD2) zum Messen der besagten zeitlich gemittelten Amplituden umfasst.

**Revendications**

1. Agencement d'émetteur optique, comprenant

- une unité de transmission optique (OTU1 OTU2) permettant de générer un signal optique (OS1) comprenant une première composante de signal (OS11) ayant un état de polarisation qui se trouve dans un premier plan de polarisation (HP) et comprenant en outre une deuxième composante de signal (OS12) ayant un état de polarisation qui se trouve dans un deuxième plan de polarisation (VP) perpendiculaire audit premier plan de polarisation (HP),
- une connexion en série comprenant un premier rotateur de polarisation (FR1), un guide d'ondes optiques (OWG), une unité de sélection de longueur d'onde (WSU), un deuxième rotateur de polarisation (FR2) et un miroir (M2),

dans lequel ladite unité de transmission optique (OTU1, OTU2) et ledit miroir (M2) forment une cavité,
dans lequel ladite connexion en série est configurée

- pour fournir une fraction réfléchie de ladite première composante de signal (RSF11') à ladite unité de transmission optique (OTU1, OTU2) de sorte que son état de polarisation se trouve dans ledit premier plan de polarisation (HP),
- et en outre pour fournir une fraction réfléchie de ladite deuxième composante de signal (RSF12') à ladite unité de transmission optique (OTU1, OTU2) de sorte que son état de polarisation se trouve dans ledit deuxième plan de polarisation (VP), **caractérisé en ce que** ladite unité de transmission optique (OTU1, OTU2) comprend

- un premier SOA réflectif (SO1) et un diviseur de faisceau de polarisation (PBS), configurés en combinaison pour générer ladite première composante de signal (OS11),
- un deuxième SOA réflectif (SOA2) et un dispositif de modification de polarisation (HWP), configurés en combinaison avec ledit diviseur de faisceau de polarisation (PBS) pour générer ladite deuxième composante de signal (OS12),

dans lequel ledit diviseur de faisceau de polarisation (PBS) et ledit dispositif de modification de polarisation (HWP) sont en outre configurés en combinaison pour fournir

- ladite fraction réfléchie de ladite première composante de signal (RSF11') audit premier SOA (SOA1) de sorte que son état de polarisation se trouve dans ledit premier plan de polarisation (HP),
- et pour fournir ladite fraction réfléchie de ladite deuxième composante de signal (RSF12') audit deuxième SOA (SOA2) de sorte que son état de polarisation se trouve dans ledit premier plan de polarisation (HP).

2. Agencement d'émetteur optique selon la revendication 1,
dans lequel ledit premier SOA (SOA1) permet de moduler l'amplitude de ladite première composante de signal (OS11) en fonction des premiers bits de données,
et dans lequel ledit deuxième SOA (SOA2) permet de moduler l'amplitude de ladite deuxième composante de signal (OS12) en fonction des deuxièmes bits de données.

3. Agencement d'émetteur optique selon la revendication 2,
dans lequel ladite amplitude de ladite première composante de signal (OS11) dépend d'un courant d'entraînement dudit premier SOA (SOA1),
dans lequel ladite amplitude de ladite deuxième composante de signal (OS12) dépend d'un courant d'entraînement dudit deuxième SOA (SOA2),
dans lequel ladite unité de transmission optique (OTU1, OTU2) comprend en outre une unité de commande (CU) qui permet

- de mesurer une amplitude moyennée dans le temps de ladite première composante de signal (OS11),
- de mesurer une amplitude moyennée dans le temps de ladite deuxième composante de signal (OS12),
- et de commander une polarisation dudit courant d'entraînement dudit premier SOA (SOA1) et/ou une polarisation dudit courant d'entraînement dudit deuxième SOA (SOA2), de sorte que le rapport entre la puissance de sortie de ladite première composante de signal (OS11) et la puissance de sortie de ladite deuxième composante de signal (OS12) ait une valeur prédéfinie.

4. Agencement d'émetteur optique selon la revendication 3,
dans lequel ladite valeur prédéfinie est la valeur 2 ou ½.

5. Agencement d'émetteur optique selon la revendication 1,
dans lequel lesdits SOA (SOA1, SOA2) ont des fonctions de gain dépendant de la polarisation respectives.

6. Agencement d'émetteur optique selon la revendication 1,
dans lequel ladite unité de sélection de longueur d'onde est un réseau sélectif planaire (AWG),
dans lequel ladite unité de transmission optique (OTU1, OTU2) est couplée optiquement par l'intermédiaire dudit guide d'onde optique (OWG) à un port côté émetteur dudit réseau sélectif planaire (AWG),
et dans lequel le deuxième rotateur de polarisation (FR2) et ledit miroir (M2) sont couplés optiquement à un port côté réseau dudit réseau sélectif planaire (AWG).

7. Agencement d'émetteur optique selon la revendication 6,
dans lequel ledit port côté réseau dudit réseau sélectif planaire (AWG) est un port de ligne (LP) dudit réseau sélectif planaire (AWG),
et dans lequel ledit deuxième rotateur de polarisation (FR2) et ledit miroir (M2) sont couplés optiquement audit port de ligne (LP) par l'intermédiaire d'un coupleur optique (OC).

8. Agencement d'émetteur optique selon la revendication 6,
dans lequel ledit port côté réseau dudit réseau sélectif planaire est un port de cavité (CP) dudit réseau sélectif planaire.

9. Agencement d'émetteur optique selon la revendication 3,

dans lequel ladite unité de commande (CU) comprend des photodiodes à faible vitesse (PD1, PD2) pour mesurer lesdites amplitudes moyennées dans le temps.

Fig. 1

EP 2 840 728 B1

Fig. 2

# Fig. 3

Fig. 4

Fig. 5

# Fig. 6

OTA1

$\overrightarrow{\text{OF}}$

OC LP WSU AWG

Faraday Rotator

FR2 M2 $\lambda/4$ Mirror

RN1

Distribution Fiber

OWG

OI FR1 $\lambda/4$ Faraday Rotator

$\underset{\text{DS}}{\overset{\text{RSF11''}}{\Longleftarrow}}$

$\underset{\text{US}}{\overset{\text{OS11I}}{\Longrightarrow}}$

TD

10Gb/s

Demux

Even-channel 5GBaud

Odd-channel 5GBaud

PBS SOA1 M11 TD1 TD2 SGU1

$\lambda/2$ HWP

$\underset{\text{US}}{\overset{\text{OS12I}}{\Longrightarrow}}$

SOA2 M12 SGU2

OTU1

$\underset{\text{DS}}{\overset{\text{RSF12''}}{\Longrightarrow}}$

$\underset{\text{US}}{\overset{\text{OS1}}{\Longleftarrow}} = \underset{\text{US}}{\overset{\text{OS11}}{\Longrightarrow}} + \underset{\text{US}}{\overset{\text{OS12}}{\Downarrow}}$    HP   VP

$\underset{\text{DS}}{\overset{\text{RSF1'}}{\Longrightarrow}} = \underset{\text{DS}}{\overset{\text{RSF11'}}{\Longleftarrow}} + \underset{\text{DS}}{\overset{\text{RSF12'}}{\Uparrow}}$

EP 2 840 728 B1

Fig. 7

EP 2 840 728 B1

Fig. 8

## Fig. 9a

Single-section
reflective component

SGUA

SOA/FPL    M

## Fig. 9b

Multiple-section
reflective component

SEC1  SEC2  SEC3

SGUB

SOA/EAM/FPL    M

# Fig. 10

| Modulating signal | | Detected signal amplitude |
|---|---|---|
| Odd sequence R-SOA1 | Even sequence R-SOA1 | |
| 0 | 0 | $E_0 = \left| A_1^s \right|^2 - ER = 2 \left| A_2^s \right|^2 - ER$ |
| 1 | 0 | $E_1 = \left| A_1^s \right|^2$ |
| 1 | 1 | $E_2 = 2E_1 = \left| A_2^s \right|^2 = 2 \left| A_1^s \right|^2$ |
| 0 | 1 | $E_3 = E_1 + E_2 = 3 \left| A_1^s \right|^2$ |

Table 1 Amplitude-level Gray coding (ER = Modulation Extinction Ratio)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Up to 10.7-Gb/s High-PDG RSOA-Based Colorless Transmitter for WDM Networks. **MARAZZI.** Photonics Technology Letters. IEEE, 01 April 2013, vol. 25, 637-640
- Polarization noise suppression in retracing optical fiber circuits, N.C. Pistoni and M. Martinelli. *OPTICS LETTERS,* 15 May 1991, vol. 16 (10
- **L. MARAZZI ; P. PAROLARI, ; M. BRUNERO ; A. GATTO ; M. MARTINELLI ; R. BRENOT, ; S. BARBET, ; P. GALLI ; G. GAVIOLI.** Up to 10.7-Gb/s High-PDG RSOA-Based Colorless Transmitter for WDM Networks. *IEEE Photonics Technologies Letters,* April 2013, vol. 25 (7), 637-640
- **S. SAVORY, ; G. GAVIOLI ; R. I. KILLEY ; P. BAY- VEL.** Electronic compensation of chromatic dispersion using a digital coherent receiver. *Optics Express,* February 2007, vol. 15 (5), 2120-2126
- **R. NAGARAJAN et al.** 10 Channel, 45.6 Gb/s per Channel, Polarization-Multiplexed DQPSK, InP Receiver Photonic Integrated Circuit. *Journal of Lightwave Technology,* February 2011, vol. 29 (4), 386-395